(19) Europäisches Patentamt / European Patent Office / Office européen des brevets

(11) **EP 0 930 695 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(51) Int Cl.:
*H02M 1/12* *(2006.01)*

(21) Anmeldenummer: **98124563.2**

(22) Anmeldetag: **22.12.1998**

(54) **Filteranordnung zur Dämpfung für Umrichter mit geregeltem Spannungszwischenkreis und sinusförmigen Phasenströmen**

Filter arrangement for converter with regulated voltage intermediate circuit and sinusoidal phase currents

Dispositif de filtrage pour convertisseur avec circuit intermédiaire de tension régulé et courants de phase sinusoidales

(84) Benannte Vertragsstaaten:
**AT CH DE ES FR GB IT LI SE**

(30) Priorität: **14.01.1998 DE 29800567 U**

(43) Veröffentlichungstag der Anmeldung:
**21.07.1999 Patentblatt 1999/29**

(73) Patentinhaber: **SIEMENS AKTIENGESELLSCHAFT**
**80333 München (DE)**

(72) Erfinder:
• **Göpfrich, Kurt, Dipl.-Ing.**
  **91058 Erlangen (DE)**
• **Karasek, Manfred, Dipl.-Ing. (FH)**
  **89555 Steinheim (DE)**

(56) Entgegenhaltungen:
  **WO-A-96/24983**          **DE-A- 1 927 415**
  **DE-U- 29 506 951**       **US-A- 3 935 551**

EP 0 930 695 B1

## Beschreibung

Die Erfindung betrifft eine Filteranordnung zur Dämpfung von leitungsgebundenen nieder- und hochfrequenten Netzrückwirkungen, insbesondere zur selektiven Dämpfung im Frequenzbereich von 2kHz bis 150kHz, für Umrichter mit geregeltem Spannungszwischenkreis und sinusförmigen Phasenströmen, welche zwischen Netzausgang (Line) und Eingang (Load) des Umrichters angeordnet ist.

Eine Filteranordnung mit den Merkmalen des Oberbegriffs des Anspruchs 1 ist durch die WO 96/24983 A1 bekannt.

Beim Betrieb eines Umrichters mit Spannungszwischenkreis sind Netzrückwirkungen (Leitungsgebundene Störaussendung) unvermeidbar. Das Spektrum der Störaussendung kann dabei in vier Frequenzbereiche untergliedert werden:

1. 0Hz .. 2kHz
2. 2kHz .. 9kHz
3. 9kHz .. 150kHz
4. 150kHz .. 30Mhz

Für den 4. Frequenzbereich gibt es verbindliche Grenzwerte (Grenzwertklasse A / B) die im Rahmen der CE-Konformitätserklärung im Hinblick auf Elektromagnetische Verträglichkeit EMV eingehalten werden müssen. Grenzwerte für den 2. Frequenzbereich sind derzeit bereits in Planung.

Die Forderungen der Elektrizitätswerke insbesondere des VDEW (Verein Deutscher Elektrizitätswerke) bezüglich der Verbesserung des Leistungsfaktors betreffen den 1. Frequenzbereich und können mit einer Drehstrombrückenschaltung wie der herkömmlichen B6-Brücke nicht erfüllt werden (vgl. Brosch: Moderne Stromrichterantriebe, 1. Auf1., Würzburg, Vogel-Verlag 1989, S. 91f). Zur Erfüllung dieser Anforderungen ist ein Umrichter mit sinusförmiger Stromaufnahme erforderlich.

Das Spektrum der Störungen wird damit in den 2. bzw. 3. Frequenzbereich verlagert. Ein Vorteil dabei ist, daß in diesem Frequenzbereich die Störungen mit vertretbarem Aufwand herausgefiltert werden können.

Für den Betrieb eines Umrichters mit geregeltem Spannungszwischenkreis sind der 2. bzw. 3. Frequenzbereich jedoch auch ohne Berücksichtigung irgendwelcher Grenzwerte von entscheidender Bedeutung. Die Störaussendung ist in diesem Frequenzbereich sehr hoch und kann von Lärmbelästigung bis hin zur Störung anderer an diesem Netz betriebener Geräte führen.

Herkömmliche Netzfilter sind für den 4. Frequenzbereich und den Betrieb von Umrichtern mit B6-Brückenschaltung (ungeregeltem Spannungszwischenkreis) entwickelt. Die Frequenzbereiche darunter blieben dabei jedoch unberücksichtigt.

Beim Betrieb von Umrichtern mit geregeltem Spannungszwischenkreis an einem solchen Filter können Resonanzen zur Überhöhung der Störaussendung und damit zur Verschärfung der geschilderten Probleme führen.

Aufgabe der vorliegenden Erfindung ist es daher, eine Filteranordnung für den 2. und 3. der eingangs angeführten Frequenzbereiche zu schaffen.

Diese Aufgabe wird gemäß der vorliegenden Erfindung durch eine Weiterbildung der eingangs genannten Filteranordnung gelöst, indem ein symmetrischer Filterteil bestehend aus je einem jeder Netzphase zugeordneten Kondensator zur Verringerung der Amplitude der Störspannung vorgesehen ist, dem eine Parallelschaltung aus einem Dämpfungswiderstand zum Bedämpfen der Resonanzfrequenz und einer Induktivität für die Netzfrequenz-Umladeströme nachgeschaltet ist, sowie mit einem asymmetrischen Filterteil bestehend aus den symmetrischen Filtermitteln in Sternschaltung nachgeschalteten weiteren Kondensatoren, deren Sternpunkt über eine weitere Parallelschaltung aus einem Kondensator und einem Dämpfungswiderstand mit der Netzerde verbunden ist.

Um bei rückspeisefähigen Umrichtern ungedämpfte Schwingungen zwischen der Eingangs- und Ausgangsseite des Umrichters zu vermeiden, weist eine erste vorteilhafte Ausgestaltung der Filteranordnung gemäß der vorliegenden Erfindung umrichterseitig in einer weiteren Filterstufe weitere Kondensatoren auf, die in Sternschaltung zwischen die Netzphasen geschaltet sind und deren Sternpunkt über einen Dämpfungswiderstand mit der Netzerde verbunden ist.

Eine alternative vorteilhafte Ausgestaltung der Filteranordnung gemäß der vorliegenden Erfindung weist umrichterseitig in einer weiteren Filterstufe für jede Phase eine Induktivität auf, welche über einen gemeinsamen Kern verfügen und eine weitere Wicklung zur Einkopplung eines Dämpfungswiderstands aufweisen.

Zu einer optimalen Vermeidung einer Resonanzüberhöhung asymmetrischer Ströme ist eine weitere vorteilhafte Ausgestaltung der Filteranordnung gemäß der vorliegenden Erfindung dadurch gekennzeichnet, daß der Dämpfungswiderstand des asymmetrischen Filterteils einen Wert $R2 > 2 * \sqrt{Lres / Cres}$ mit Lres, Cres = resultierende Induktivität, Kapazität des Reihenschwingkreises aufweist.

Eine weitere vorteilhafte Ausgestaltung der Filteranordnung gemäß der vorliegenden Erfindung weist einen als PTC-Widerstand ausgestalteten Dämpfungswiderstand des asymmetrischen Filterteils auf.

Beispielsweise für den Fall, daß das Filter versehentlich an einem IT-Netz betrieben wird, besitzt dieser Aufbau folgenden Vorteil: bei einem Schluß zwischen Phase und Erde wird dieser PTC-Widerstand (positiver Temperaturkoeffizient) hochohmig. Dieser Prozess ist reversibel - das Netzfilter wird nicht zerstört.

Besonders vorteilhaft läßt sich das Prinzip der Erfindung auch auf Filteranordnungen übertragen, die durch Stern-Dreieck-Transformation oder Dreieck-Stern-Transformation entstehen.

Weitere Vorteile und erfinderische Einzelheiten werden anhand der folgenden Beschreibung eines Ausführungsbeispiels und in Verbindung mit den Figuren deutlich. es zeigen

FIG 1    Ersatzschaltbild für den symmetrischen Teil des Netzfilters,
FIG 2    Ersatzschaltbild für den asymmetrischen Teil des Netzfilters,
FIG 3    Erweiterung des aymmetrischen Anteils zur Bedämpfung des Schwingkreises $C_2$ - $L_{k,a}$ - Ca,
FIG 4    kostenoptimierte Alternative zur Filteranordnung nach FIG 3 und
FIG 5    komplettes Netzfilter gemäß der vorliegenden Erfindung.

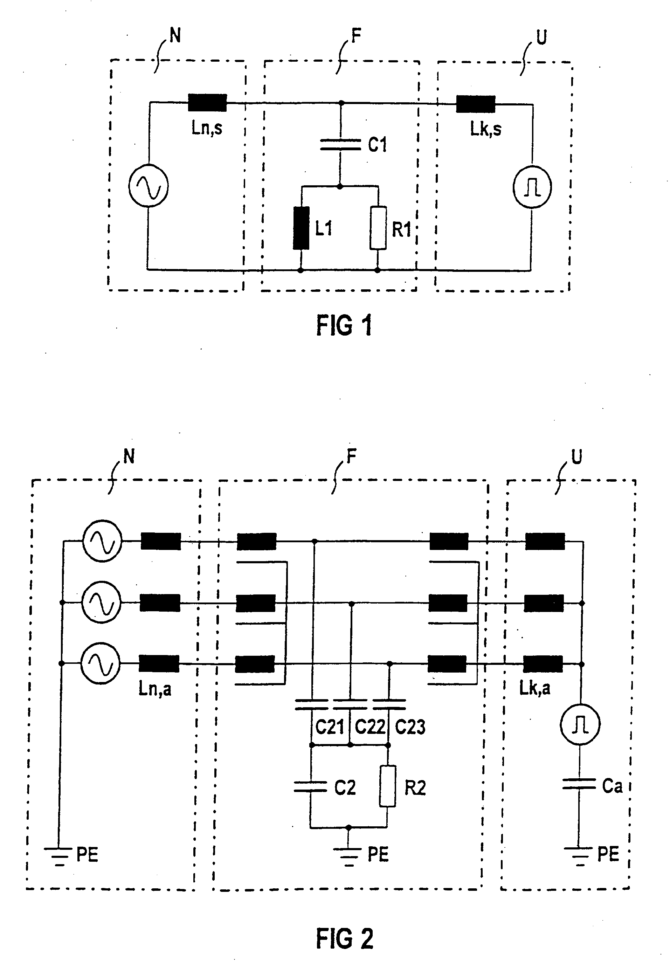

In der Darstellung nach FIG 1 ist ein Ersatzschaltbild für den symmetrischen Teil des Netzfilters gemäß der vorliegenden Erfindung gezeigt.

Dieses besteht aus einem elektrischen Netz N, der Filteranordnung F und einem Umrichter U. Das Netz weist eine symmetrisch wirksame Netzinduktivität auf und der Umrichter U eine symmetrisch wirksame Kommutierungsdrossel. Die Filteranordnung F zeigt den symmetrischen Filterteil bestehend aus einer parallel zum Netzausgang bzw. zum Umrichtereingang geschalteten Serienschaltung aus einem Kondensator C1 und einer Parallelschaltung aus einer Induktivität L1 mit einem Dämpfungswiderstand R1.

Dabei beschreibt Ln,s die symmetrisch wirksame Netzinduktivität und Lk,s die symmetrisch wirksame Induktivität der Kommutierungsdrossel.

Ohne den Einsatz eines Filters wird die Amplitude der Störungen auf dem Netz durch den induktiven Spannungsteiler bestehend aus Lk,s und Ln,s nach Folgender Berechnungsvorschrift bestimmt:

$$G(j\omega) \quad = \quad \frac{usn}{us} \quad = \quad \frac{Ln,s}{Ln,s + Lk,s} \qquad (1)$$

In einem ersten Schritt wird nun mit einem Kondensator C1 die Amplitude der Störspannung auf einen gewünschten Wert verringert. Die Übertragungsfunktion für diesen Fall lautet dann:

$$G(j\omega) \quad = \quad \frac{1}{1 - \omega^2\, L\, C_1} \quad => \quad f_0 = \frac{1}{2\,\pi\,\sqrt{L\, C_1}} \qquad (2)$$

Dabei ist L gleich der Parallelschaltung von Ln,s und Lk,s.

Wie man erkennt, kann die Resonanzfrequenz durch die Netzimpedanz in einem großen Bereich verschoben werden. Eine Einschränkung der Netzimpedanz würde diesen Bereich verringern, ist jedoch in der Realität nicht durchsetzbar. Es wird also immer Netzbedingungen geben, bei denen es zu einer Resonanzüberhöhung des Störspektrums kommt.

Im nächsten Schritt wird daher diese Resonanzstelle mit dem Dämpfungswiderstand R1 bedämpft. Der Nachteil dabei ist die hohe Verlustleistung des Widerstandes aufgrund der 50Hz Grundschwingung der Netzspannung.

Die 50Hz - Umladeströme können daher von einer Drossel L1 übernommen werden. Diese erhöht dann auch gleichzeitig die Mindestimpedanz im Kreis ohne den Laststrom führen zu müssen. Es kann also eine relativ kleine und damit kostengünstige Drossel verwendet werden.

In der Darstellung nach FIG 2 ist ein Ersatzschaltbild für den asymmetrischen Teil des Netzfilters gezeigt.

Auf der linken Seite ist wiederum ein elektrisches Netz H gezeigt, in diesem Fall anhand eines Dreiphasennetzes mit asymmetrisch wirksamen Netzinduktivitäten. Daran schließt sich der asymmetrische Teil der Filteranordnung F, auf die wiederum der bereits erwähnte Umrichter U folgt, welcher eine asymmetrisch wirksame parasitäre Kapazität am Umrichterausgang aufweist. Der asymmetrische Filterteil weist eingangsseitig und ausgangsseitig für jede Netzphase eine Induktivität auf, wobei die eingangsseitigen und ausgangsseitigen Netzinduktivitäten der einzelnen Netzphasen jeweils über einen gemeinsamen magnetischen Kern gekoppelt sind (stromkompensierte Drossel). Zwischen eingangsseitigen und ausgangsseitigen Induktivitäten des asymmetrischen Filterteils sind in Sternschaltung Kondensatoren C21, C22, C23 geschaltet, an deren Sternpunkt wiederum ein Parallelschaltung aus einer weiteren Kapazität C2 mit einem Dämpfungswiderstand R2 vorgesehen ist, worüber der Sternpunkt mit der Netzerde PE verbunden ist.

Dabei ist Ln,a die asymmetrisch wirksame Netzinduktivität und Lk,a die asymmetrisch wirksame Induktivität der Kommutierungsdrossel. Ca beschreibt die asymmetrisch wirksame parasitäre Kapazität am Umrichterausgang (incl. Leitungskapazität).

Analog zum oben bereits erläuterten kann es auch hier ohne einen Dämpfungswiderstand R2 zu einer Resonanzüberhöhung der asymmetrischen Ströme kommen. Der Widerstand R2 kann nun so gewählt werden, daß eine Resonanzüberhöhung gänzlich ausgeschlossen wird (unabhängig von Ln,a):

$$R > 2 \sqrt{Lres / Cres} \qquad\qquad (3)$$

mit Lres, Cres = resultierende Induktivität, Kapazität des Reihenschwingkreises

Wenn diese Bedingung erfüllt ist, kann der asymmetrische Filterteil so dimensioniert werden, daß der Betrieb an einem FI-Schutzschalter möglich wird.

Die Dämpfungseigenschaften des bisher beschriebenen Netzfilters würden bereits ausreichen, um den Anforderungen bzgl. Netzrückwirkungen zu genügen.

Mit dem erfindungsgemäßen Filterkonzept kann jedoch noch ein weiteres Problem gelöst werden: bei rückspeisefähigen Umrichtern kommt es zu ungedämpften Schwingungen zwischen der Eingangs- und der Ausgangsseite des Umrichters.

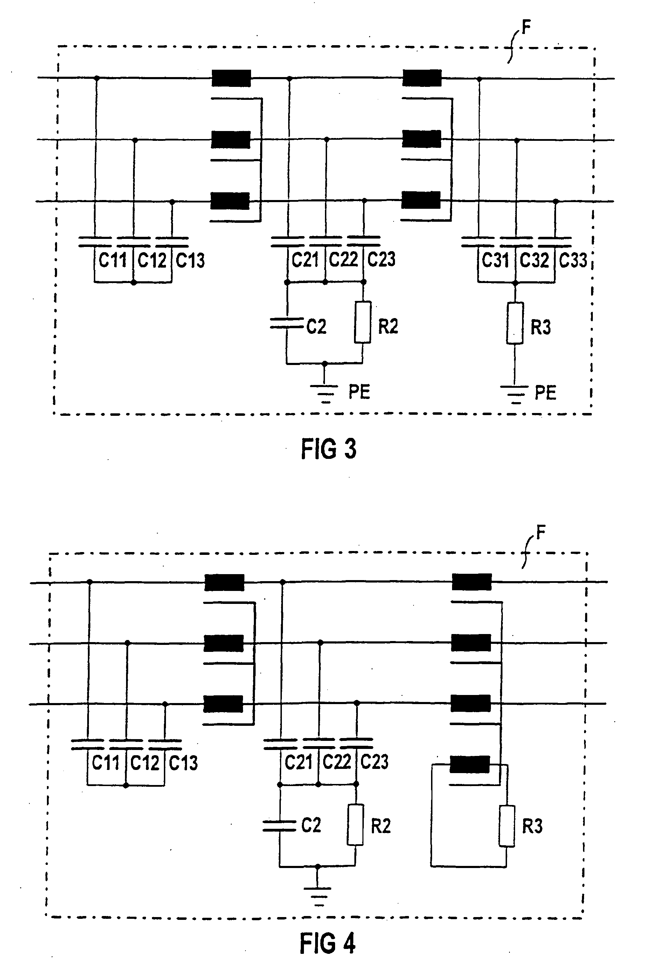

Eine zur Lösung auch dieses Problems geeignete Filteranordnung zeigt die Darstellung in FIG 3 in Form einer Erweiterung des aymmetrischen Filterteils zur Bedämpfung des Schwingkreises C2 - L - Ca.

Dabei sind den ausgangsseitigen Netzinduktivitäten des asymmetrischen Filterteils weitere Kondensatoren C31, C32, C33 in Sternschaltung nachgeschaltet, deren Sternpunkt über einen weiteren Dämpfungswiderstand R3 mit der Netzerde PE verbunden ist.

Zusätzlich sind eingangsseitig in herkömmlicher Weise Kondensatoren C11, C12, C13 in Sternschaltung zwischen die Netzphasen geschaltet.

Die Resonanzfrequenz wird im wesentlichen bestimmt durch die parasitäre Kapazität des Umrichters (incl. der Motorleitungen) gegen Erde und die asymmetrisch wirksame Induktivität der Kommutierungsdrossel (incl. - falls vorhanden - der Induktivität der stromkompensierten Drossel auf der Umrichterseite des Filters).

Um auch diese Schwingung zu bedämpfen, wird mit den Kondensatoren C31, C32, C33 (>> Ca) ein virtueller Sternpunkt geschaffen und über einen weiteren Dämpfungswiderstand R3 mit Erde PE verbunden.

Die Darstellung nach FIG 4 zeigt eine kostenoptimierte Alternative zur in FIG 3 dargestellten Lösung.

In dieser alternativen Ausführungsform ist der Dämpfungswiderstand R3, welcher bereits in der Darstellung gemäß FIG 3 eingeführt wurde, dadurch in den Kreis eingekoppelt, das die ausgangsseitige Induktivität erweitert wird, indem eine vierte Wicklung auf dem gemeinsamen magnetischen Kern vorgesehen ist, welche durch den Dämpfungswiderstand R3 kurzgeschlossen ist.

Als Alternative kann zur Schwingungsbedämpfung somit über eine vierte Wicklung der Dämpfungswiderstand R3 in den Kreis eingekoppelt werden.

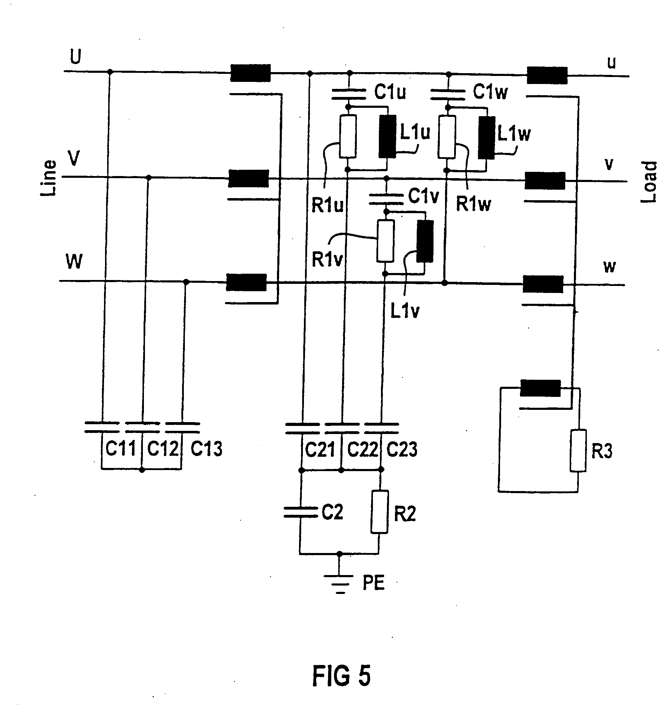

Die Darstellung gemäß FIG 5 zeigt ein Ausführungsbeispiel der Filteranordnung gemäß der vorliegenden Erfindung, in das die vorangehenden Ausführungen eingeflossen sind.

Dabei ist der Eingang der Filteranordnung mit LINf und der Ausgang mit LOAD gekennzeichnet. In dieser kompletten Netzfilteranordnung befindet sich alle im vorangehenden beschriebenen Filtermittel wieder. So weist die Filteranordnung eingangsseitig in herkömmlicher Weise in Sternschaltung zwischen die Netzphasen geschaltete Kondensatoren C11, C12 und C13 auf. Es folgt die einangsseitige Netzinduktivität. Für jede einzelne Netzphase U, V, W ist je ein in der Darstellung gemäß FIG 1 gezeigter symmetrischer Filterteil bestehend - am Beispiel der Netzphase U - aus einem Kondensator C1u und einer Parallelschaltung aus einem Dämpfungswiderstand R1u und einer Induktivität L1u vorgesehen. Die anderen Netzphasen V und W besitzen entsprechende symmetrische Filterteile.

Während ein solcher symmetrischer Filterteil für die Phase W zwischen die Phasen U und W geschaltet ist, sind die entsprechenden symmetrischen Filterteile der Phasen U und V mit den Kondensatoren C22 und C23 der Sternschaltung von Kondensatoren C21 bis C23 des asymmetrischen Filterteiles verbunden. Der Kondensator C21 dieses asymmetrischen Filterteiles ist hingegen direkt zur Phase U geführt. Der Sternpunkt der Kondensatoren C21 bis C23 ist dann in der weiter oben beschriebenen Art und Weise über eine Parallelschaltung aus einem weiteren Kondensator C2 und einem Dämpfungswiderstand R2 mit der Netzerde PE verbunden. Der weitere Dämpfungswiderstand R3 ist in der in der Darstellung gemäß FIG 4 gezeigten Art und Weise über eine vierte Wicklung in den Kreis eingekoppelt.

Auf diese Weise erhält man eine Filteranordnung bestehend aus symmetrischem Filterteil und asymmetrischem Filterteil, mit der die im vorangehenden beschriebenen Vorteile der vorliegenden Erfindung erreicht werden können.

## Patentansprüche

1. Filteranordnung (F) zur Dämpfung von leitungsgebundenen nieder- und hochfrequenten Netzrückwirkungen, insbesondere zur selektiven Dämpfung im Frequenzbereich von 2kHz bis 150kHz, für Umrichter (U) mit geregeltem Spannungszwischenkreis und sinusförmigen Phasenströmen, welche zwischen Netzausgang (N, Line) und Eingang (Load) des Umrichters (U) angeordnet ist, mit einem symmetrischen Filterteil bestehend aus je einem jeder Netzphase (U,V,W) zugeordneten symmetrischen Filtermittel bestehend aus einem Kondensator (C1,C1u,C1v,C1w) zur Verringerung der Amplitude der Störspannung, dem eine Parallelschaltung aus einem Dämpfungswiderstand (R1,R1u,R1v,R1w) zum Bedämpfen der Resonanzfrequenz und einer Induktivität (L1, L1u,L1v,L1w) für die Netzfrequenz-Umladeströme nachgeschaltet ist, **gekennzeichnet durch** einen asymmetrischen Filterteil bestehend aus den symmetrischen Filtermitteln (C1,R1,L1) in Sternschaltung nachgeschalteten weiteren Kondensatoren (C21,C22,C23), deren Sternpunkt über eine weitere Parallelschaltung aus einem Kondensator (C2) und einem Dämpfungswiderstand (R2) mit der Netzerde (PE) verbunden ist.

2. Filteranordnung nach Anspruch 1, **dadurch gekennzeichnet, daß** umrichterseitig in einer weiteren Filterstufe weitere Kondensatoren (C31,C32,C33) in Sternschaltung zwischen die Netzphasen geschaltet sind, deren Sternpunkt über einen Dämpfungswiderstand (R3) mit der Netzerde (PE) verbunden ist.

3. Filteranordnung nach Anspruch 1, **dadurch gekennzeichnet, daß** umrichterseitig in einer weiteren Filterstufe für jede Phase eine Induktivität vorgesehen ist, welche über einen gemeinsamen Kern verfügen und eine weitere Wicklung zur Einkopplung eines Dämpfungswiderstands (R3) aufweisen.

4. Filteranordnung nach einem der Ansprüche 1 bis 3, **dadurch gekennzeichnet, daß** der Dämpfungswiderstand (R2) des asymmetrischen Filterteils einen Wert R2 $> 2 * \sqrt{Lres / Cres}$ mit Lres, Cres = resultierende Induktivität, Kapazität des Reihenschwingkreises aufweist.

5. Filteranordnung nach einem der Ansprüche 1 bis 4, **dadurch gekennzeichnet, daß** der Dämpfungswiderstand (R2) des asymmetrischen Filterteils als PTC-Widerstand ausgeprägt ist.

6. Filteranordnung, **dadurch gekennzeichnet, daß** diese durch Stern-Dreieck-Transformation oder Dreieck-Stern-Transformation aus einer Anordnung nach einem der Ansprüche 1 bis 5 abgeleitet ist.

## Claims

1. Filter arrangement (F) for damping line-conducted low-frequency and high-frequency system perturbations, particularly for the selective damping in the frequency range of 2kHz to 150 kHz, for a converter (U) having a regulated voltage intermediate circuit and sinusoidal phase currents, which is arranged between a network output (N, Line) and input (Load) of the converter (U), having a symmetrical filter part consisting of a symmetrical filter means consisting of a capacitor (C1, C1u, C1v, C1w) respectively assigned to each network phase (U, V, W) for reducing the amplitude of the interference voltage, downstream of which is arranged a parallel circuit comprising a damping resistor (R1, R1u, R1v, R1w) for damping the resonance frequency and an inductor (L1, L1u, L1v, L1w) for the network frequency conversion currents, **characterized by** an asymmetrical filter part consisting of the symmetrical filter means (C1, R1, L1) in additional capacitors (C21, C22, C23) arranged downstream in the star connection, the star point of which is connected to the phase earth (PE) by way of an additional parallel circuit comprising a capacitor (C2) and a damping resistor (R2).

2. Filter arrangement according to claim 1, **characterized in that** additional capacitors (C31, C32, C33) are connected in the star connection between the network phases in an additional filter stage on the converter side, the star point of which is connected to the phase earth (PE) by way of an damping resistor (R3).

3. Filter arrangement according to claim 1, **characterized in that** an inductor is provided on the converter side in an additional filter stage for each phase, which inductors have a common core and comprise an additional winding for coupling a damping resistor (R3).

4. Filter arrangement according to one of claims 1 to 3, **characterized in that** the damping resistor (R2) of the asymmetrical filter element has a value $R2 > 2 * \sqrt{Lres/Cres}$ where Lres is the resulting inductance and Cres is the resulting capacitance of the series resonant circuit.

5. Filter arrangement according to one of claims 1 to 4, **characterized in that** the damping resistor (R2) of the asymmetrical filter element takes the form of a PTC resistor.

6. Filter arrangement, **characterized in that** this is derived from an arrangement according to one of claims 1 to 5 using a star-delta transformation or delta-star transformation.

**Revendications**

1. Dispositif ( F ) de filtrage pour amortir des réactions de réseaux liées à la ligne de basse fréquence et de haute fréquence, notamment pour amortir sélectivement dans le domaine de fréquence de 2 kHz à 150 kHz, pour des convertisseurs ( U ) à circuit intermédiaire de tension régulée et courants de phase sinusoïdaux, qui est monté entre la sortie ( N, Line ) du réseau et l'entrée ( Load ) du convertisseur ( U ), comprenant respectivement une partie de filtrage symétrique constituée d'un moyen de filtrage symétrique associé à chaque phase ( U, V, W ) du réseau et constitué d'un condensateur ( C1, C1u, C1v, C1w ) pour diminuer l'amplitude de la tension parasite, en aval duquel est monté un circuit parallèle composé d'une résistance ( R1, R1u, R1v, R1w ) d'amortissement pour amortir la fréquence de résonance et d'une inductance ( L1, L1u, L1v, L1w ) pour les courants de transfert à la fréquence du réseau, **caractérisé par** une partie de filtrage dissymétrique constituée des moyens ( C1, R1, L1 ) de filtrage symétriques, d'autres condensateurs ( C21, C22, C23 ) montés en aval en montage étoile, dont le point médian est relié à la terre ( PE ) du réseau par un autre circuit parallèle composé d'un condensateur ( C2 ) et d'une résistance ( R2 ) d'amortissement.

2. Dispositif de filtrage suivant la revendication 1, **caractérisé en ce que,** du côté du convertisseur, sont montés dans un autre étage de filtre d'autres condensateurs ( C31, C32, C33 ) en un montage étoile entre les phases du réseau, dont le point médian est relié à la terre ( PE ) du réseau par une résistance ( R3 ) d'amortissement.

3. Dispositif de filtrage suivant la revendication 1, **caractérisé en ce que,** du côté du convertisseur, est prévu, dans un autre étage de filtre, pour chaque phase une inductance qui dispose d'un noyau commun et qui ont un autre enroulement de couplage d'une résistance ( R3 ) d'amortissement.

4. Dispositif de filtrage suivant l'une des revendications 1 à 3, **caractérisé en ce que** la résistance ( R2 ) d'amortissement de la partie de filtre dissymétrique a une valeur $R2 > 2 * \sqrt{Lres/Cres}$, Lres, Cres = inductance, capacité résultantes du circuit oscillant série.

5. Dispositif de filtrage suivant l'une des revendications 1 à 4, **caractérisé en ce que** la résistance ( R2 ) d'amortissement de la partie de filtre dissymétrique est conçue en tant que résistance CTP.

6. Dispositif de filtrage, **caractérisé en ce qu'**il est dérivé d'un dispositif suivant l'une des revendications 1 à 5 par transformation étoile-triangle ou par transformation triangle-étoile.

**FIG 1**

**FIG 2**

**FIG 3**

**FIG 4**

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9624983 A1

**In der Beschreibung aufgeführte Nicht-Patentliteratur**

- **BROSCH.** Moderne Stromrichterantriebe. Vogel-Verlag, 1989, vol. 1, 91f